# EUROPÄISCHE PATENTSCHRIFT

(11) **EP 2 961 972 B1**
(45) Veröffentlichungstag und Bekanntmachung des Hinweises auf die Patenterteilung: **01.03.2017**
(21) Anmeldenummer: 13811411.1
(22) Anmeldetag: 10.12.2013
(51) Int. Cl.: F02D 9/10, F02D 9/04, F16K 1/226, F16K 27/02

(54) **KLAPPENVORRICHTUNG FÜR EINE VERBRENNUNGSKRAFTMASCHINE**
FLAP DEVICE FOR AN INTERNAL COMBUSTION ENGINE
DISPOSITIF À CLAPET POUR MOTEUR À COMBUSTION INTERNE

(30) Priorität: 28.02.2013 DE 102013101983
(43) Veröffentlichungstag der Anmeldung: 06.01.2016
(73) Patentinhaber: Pierburg GmbH, 41460 Neuss (DE)
(72) Erfinder: GERARDS, Hans, 52538 Gangelt (DE)
(74) Vertreter: Patentanwälte ter Smitten Eberlein Rütten Partnerschaftsgesellschaft
(86) Internationale Anmeldenummer: PCT/EP2013/076068
(87) Internationale Veröffentlichungsnummer: WO 2014/131478

(56) Entgegenhaltungen:
- WO-A1-2008/043429
- US-A- 5 630 571

## Beschreibung

Die Erfindung betrifft eine Klappenvorrichtung für eine Verbrennungskraftmaschine mit einem Strömungsgehäuse, in dem ein Strömungskanal ausgebildet ist, einer Stellwelle, einem Klappenkörper, der auf der Stellwelle im Strömungskanal angeordnet ist, einer Gehäusebohrung im Strömungsgehäuse, durch welche die Stellwelle nach außen ragt, einem Hebel, der an der Stellwelle befestigt ist, einer Lagerbuchse, welche in der Gehäusebohrung angeordnet ist, und in der die Stellwelle gelagert ist und einer Dichtscheibe mit einer zumindest teilweise sphärisch geformten Oberfläche.

Derartige Klappenvorrichtungen dienen beispielsweise als Abgasstauklappen oder Abgasrückführklappen im Abgasstrang eines Verbrennungsmotors. Das Abgas enthält Schadstoffe, welche nicht nach außen dringen dürfen, so dass eine zuverlässige Abdichtung entlang der Welle, die nach außen in Richtung eines Aktuators ragt, sichergestellt werden muss. Diese Abdichtung muss bei den wechselnden thermischen Belastungen jederzeit einwandfrei funktionieren. Zusätzlich muss mit den Klappen eine sehr genaue Regelbarkeit eingehalten werden, um die Schadstoffrichtlinien moderner Verbrennungsmotoren zu erfüllen. Es hat sich allerdings herausgestellt, dass Schäden der Lagerstelle noch häufiger durch ein Eindringen von außen entstehen. Dies führt zu Korrosion im Bereich des Lagers aufgrund von Schmutzeintrag oder Salz- und Feuchtigkeitseintrag.

Es sind verschiedene Klappenvorrichtungen bekannt geworden, mit denen versucht wird, eine ausreichende Abdichtung sicher zu stellen. So wird in der WO 2006/003017 A1 ein Klappenventil für eine Abgasanlage eines Kraftfahrzeuges vorgeschlagen, bei dem in einem Lagergehäuse, die am Strömungsgehäuse befestigt ist, eine Lagerbuchse sowie ein Federelement, eine Dichtscheibe und ein Lagerring angeordnet sind. Die Welle ragt aus dem Lagergehäuse heraus, welches an seinem zum Strömungsgehäuse weg weisenden Ende eine die Öffnung, durch die die Welle ragt, umgebende, kegelig geformte Einschnürung aufweist, gegen die der Lagerring mit seiner korrespondierend kegelig geformten Oberfläche durch die Federkraft unter Zwischenlage der Dichtscheibe gedrückt wird. Der Bereich der Anlage der kegelig geformten Flächen dient als Gleit- und Dichtfläche zwischen dem Lagergehäuse und dem Lagerring. Ein Ausströmen aus dem Lagerbereich entlang der Welle soll durch ein spielfreies Aufsetzen der Dichtschiebe erfolgen.

Des Weiteren ist aus der US 5,630,571 eine Abgasklappe mit einem Lagergehäuse bekannt, in dem eine Lagerbuchse sowie eine sphärisch geformte Dichtscheibe angeordnet ist, die gegen eine negativ sphärisch geformte Keramikscheibe anliegt. Auf dem aus dem Lagergehäuse ragenden Wellenende ist ein Hebel angeordnet an dessen Rückseite eine Wellfeder anliegt, deren entgegengesetzte Seite gegen eine Buchse anliegt, an der wiederum die Keramikscheibe anliegt. Durch die Wellfeder wird die auf die Welle aufpresste Dichtscheibe gegen die feststehende Keramikscheibe gedrückt. Die äußere Buchse ist somit jedoch den Belastungen des Spitzwassers in der Verbrennungskraftmaschine ausgesetzt.

Bei diesen beiden bekannten Abgasklappendichtsystemen müssen die Einzelteile mit einer extrem hohen Genauigkeit hergestellt werden, um eine ausreichende Abdichtung herzustellen, da andernfalls die korrespondierend geformten Oberflächen nicht dichtend wirken. Ein Eindringen von korrosiven Stoffen von außen in den Lagerbereich kann entsprechend nicht zuverlässig verhindert werden. Des Weiteren wird eine hohe Anzahl an Einzelteilen benötigt, so dass ein erhöhter Montageaufwand besteht.

Es stellt sich daher die Aufgabe, eine Klappenvorrichtung für eine Verbrennungskraftmaschine zu schaffen, bei der unabhängig von der thermischen Belastung und von daraus folgenden Wärmedehnungen eine sichere Abdichtung nach außen hergestellt wird und ein Eindringen korrosiver Stoffe von außen vermieden wird. Diese Abdichtung soll möglichst kostengünstig hergestellt werden, so dass auf enge Fertigungstoleranzen verzichtet werden kann und eine leichte Montage gewährleistet ist.

Diese Aufgabe wird durch eine Klappenvorrichtung mit den Merkmalen des Hauptanspruchs gelöst. Dadurch, dass die zumindest teilweise sphärisch geformte Oberfläche gespannt gegen eine Rückwand des Hebels anliegt, wird die Anzahl der Bauteile reduziert und damit die Montage erleichtert. Der Hebel wird dabei erstmals auch als Teil der Abdichtung verwendet, indem dieser eine Strömung entlang der Welle verhindert.

Vorzugsweise ist die Oberfläche der Dichtscheibe positiv sphärisch geformt ist und die Rückwand des Hebels zumindest teilweise negativ sphärisch oder kegelig geformt, wobei der Krümmungsradius der Oberfläche der Dichtscheibe kleiner ist als der Krümmungsradius der Rückwand des Hebels. In einer alternativen Ausführungsform ist die Rückwand des Hebels zumindest teilweise positiv sphärisch geformt ist und die Oberfläche der Dichtscheibe negativ sphärisch geformt, wobei der Krümmungsradius der Oberfläche der Dichtscheibe größer ist als der Krümmungsradius der Rückwand des Hebels. Beide Ausgestaltungen führen dazu, dass eine ringförmige Linienberührung zwischen dem Hebel und der Dichtscheibe sichergestellt wird, die sich auch dann einstellt, wenn Parallelitätsfehler vorliegen. So wird ein Eindringen von Gasen oder Flüssigkeiten durch den Zwischenraum zwischen Hebel und Dichtscheibe in den Lagerbereich zuverlässig verhindert.

Es sei darauf hingewiesen, dass für die gesamte Anmeldung unter positiver sphärischer Form eines Körpers ein Körper mit teilweise kugelförmiger Oberfläche verstanden wird, dessen Krümmungsradius also durch den Körper verläuft und unter negativer sphärischer Form eines Körpers ein Körper verstanden wird, der eine teilweise eine hohlkugelige Form aufweist, dessen Krümmungsradius also zur zum Körper entgegengesetzten Seite weist.

Die Dichtscheibe ist dabei vorteilhafterweise beweglich zur Stellwelle und diese radial umgebend angeordnet, so dass ein Kippen der Dichtscheibe zur Welle möglich wird. Dies führt zu einer sicheren Abdichtung und gleichzeitiger Unempfindlichkeit bei auftretenden thermischen Dehnungen.

Vorzugsweise belastet eine Feder den Hebel mit der Stellwelle in Richtung des Kanals. So wird auf einfache Weise die notwendige Spannung zur Erzeugung der Dichtkraft zwischen dem Hebel und der Dichtscheibe erzeugt.

In einer weiterführenden Ausgestaltung der Erfindung liegt die Dichtscheibe mit ihrer zur sphärisch gekrümmten Oberfläche axial entgegengesetzten flachen Fläche plan und gespannt gegen die Lagerbuchse an. So entsteht auch eine Abdichtung zwischen der der Lagerbuchse und der Dichtscheibe, ohne dass zusätzliche Bauteile verwendet werden müssen.

Vorzugsweise ist die Lagerbuchse eine Kohlelagerbuchse, welche unempfindlich gegen thermische und korrosive Belastungen durch das Abgas ist.

Um eine Verspannung der gesamten Lager und Dichteinheit sicher zu stellen, liegt die Lagerbuchse mit ihrem zur Dichtscheibe entgegengesetzten axialen Ende gegen einen Anschlag der Gehäusebohrung an. Durch die Feder wird somit die gesamte Einheit gegen diesen Anschlag gedrückt und somit verspannt.

In einer besonders bevorzugten Ausführungsform ist die Stellwelle im radial zur Lagerbuchse innen liegenden Bereich ballig geformt. So wird eine sichere Lagerung ohne auftretende innere Spannungen auch für den Fall sichergestellt, dass Fluchtungsfehler zwischen der Lagerbuchse und der Stellwelle vorliegen.

In einer weiterführenden Ausgestaltung der Erfindung weisen die Stellwelle und die Gehäusebohrung zwischen Kanal und Lagerbuchse jeweils zumindest einen Absatz auf. Diese Absätze wirken als Labyrinthdichtung und erhöhen den Strömungswiderstand entlang der Welle, so dass ein Eindringen von Abgas ins Lager deutlich erschwert wird.

Um ein Eindringen von Flüssigkeit oder Salz entlang der Welle von außen zu verhindern, ist der Hebel mit der Stellwelle stoffschlüssig umlaufend oder formschlüssig dicht verbunden. Diese Verbindung ist dicht und weist eine hohe Lebensdauer auf.

Des Weiteren ist es vorteilhaft, wenn am Hebel eine Hülse angeordnet ist, die sich in Richtung des Strömungskanals erstreckt. So wird der das Lager aufnehmende Bereich des Gehäuses nach außen zusätzlich abgeschirmt, so dass ein direkter Kontakt beispielsweise mit Spritzwasser vermieden wird.

Es wird somit eine Klappenvorrichtung für eine Verbrennungskraftmaschine geschaffen, welche sowohl nach außen als auch nach innen auch bei sich ändernden thermischen Belastungen ausreichend dicht ist, da Bauteil- und Montagetoleranzen sowie Wärmedehnungen, Fluchtungs- und Parallelitätsfehler durch die vorgesehene Konstruktion mit der Flexibilität der Lage der Dichtscheibe ausgeglichen werden, ohne die Dichtwirkung zu beschränken. Die Montage dieser Abdichtung und Lagerung ist ebenso wie die Herstellung der Einzelteile sehr einfach, so dass die Kosten deutlich reduziert werden. Dennoch weist diese Lagerung und Abdichtung eine sehr hohe Lebensdauer auf.

Ein Ausführungsbeispiel einer erfindungsgemäßen Klappenvorrichtung ist in den Figuren dargestellt und wird nachfolgend beschrieben.

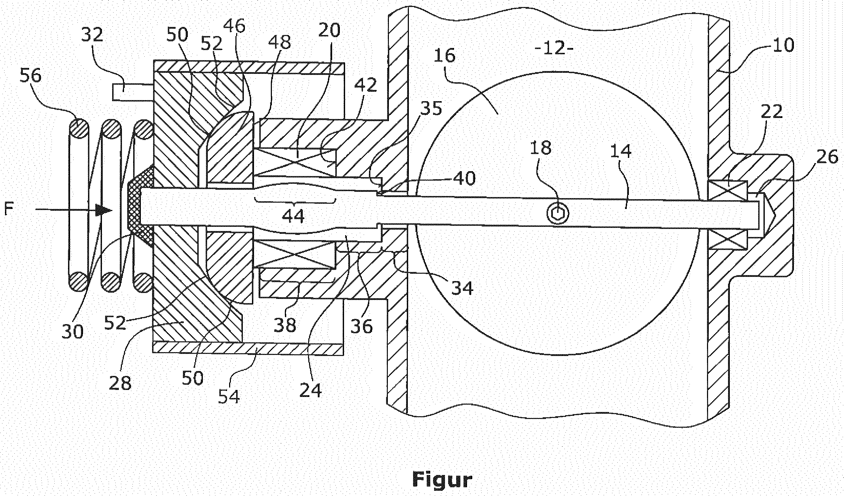

Die Figur zeigt eine Seitenansicht einer erfindungsgemäßen Klappenvorrichtung in geschnittener Darstellung.

Die erfindungsgemäße Klappenvorrichtung besteht aus einem Strömungsgehäuse 10, in dem ein beispielsweise von Abgas durchströmter Strömungskanal 12 ausgebildet ist.

Der Strömungskanal 12 wird im Querschnitt durch eine Stellwelle 14 in zwei Hälften geteilt, auf der ein Klappenkörper 16 mittels einer Schraube 18 befestigt ist, wobei auch eine Verbindung durch Stoffschluss möglich ist. Die Stellwelle 14 ist im Strömungsgehäuse 10 über zwei Lagerbuchsen 20, 22 gelagert, von denen die erste Lagerbuchse 20 in einer durchgängigen Gehäusebohrung 24 angeordnet sind, durch welche die Stellwelle 14 aus dem Strömungsgehäuse 10 nach außen ragt, und die zweite Lagerbuchse 22 auf der zur Bohrung 24 gegenüberliegenden Seite in einem im Strömungsgehäuse 10 ausgebildeten Sackloch 26 angeordnet ist. Entsprechend besteht an bezüglich der Mittelachse des Strömungsgehäuses 10 gegenüberliegenden Seiten eine zweiseitige Lagerung der Stellwelle 14.

Auf dem nach außen ragenden Ende der Stellwelle 14 ist eine als Hebel 28 dienende Scheibe mittels Stoffschluss durch eine umlaufende Schweißverbindung 30 befestigt, an deren radialem Endbereich ein Zapfen 32 befestigt ist, über den die Stellwelle 14 über ein nicht dargestelltes Gestänge mit einem Aktor verbindbar ist, der insbesondere als ein Elektromotor ausgeführt werden kann. Durch die umlaufende Schweißverbindung 30 kann kein Gas oder Flüssigkeit zwischen der Stellwelle 14 und dem Hebel 28 strömen.

Die Gehäusebohrung 24 ist stufenförmig ausgebildet und weist entsprechend drei Abschnitte 34, 36, 38 mit nach außen sich vergrößernden Durchmessern auf. Der erste Abschnitt 34 mit dem kleinsten Durchmesser begrenzt den Strömungskanal 12 und ist geringfügig größer als der Durchmesser der Stellwelle 14. Vom Strömungskanal 12 aus gesehen hinter dem ersten Abschnitt 34 weist nicht nur die Gehäusebohrung 24 einen Absatz 35 sondern auch die Stellwelle 14 einen Absatz 40 auf, so dass sich die Stellwelle 14 mit einem größeren Durchmesser weiter nach außen erstreckt. Dieser Bereich der Stellwelle 14 ist radial im zweiten Abschnitt 36 der Gehäusebohrung 24 angeordnet. Diese Absätze 35, 40 bilden gemeinsam eine Labyrinthdichtung, die ein Eindringen von Abgas in Richtung zur Lagerbuchse 20 erschwert.

Zwischen dem zweiten Abschnitt 36 und dem dritten Abschnitt 38 ist ein als Anschlag 42 dienender Absatz der Gehäusebohrung 24 ausgebildet. Gegen diesen Anschlag 42 liegt axial die als Kohlelager ausgebildete erste Lagerbuchse 20 an. Diese ist über eine Presspassung im dritten Abschnitt 38 der Gehäusebohrung 24 befestigt und umgibt und lagert die Stellwelle 14, welche im radial zur Lagerbuchse 20 innen liegenden Bereich 44 ballig ausgeführt ist. Das entgegengesetzte axiale Ende der Lagerbuchse 20 ragt axial geringfügig über diesen Lagerbereich des Strömungsgehäuses 10 hinaus und liegt gegen eine die Stellewelle 14 mit geringfügigem Abstand radial umgebende Dichtscheibe 46 an, deren zur Lagerbuchse 20 gewandte Fläche 48 flach ausgebildet ist.

Eine axial entgegengesetzte Oberfläche 50 dieser Dichtscheibe 46 ist erfindungsgemäß in ihrem radial äußeren Bereich sphärisch gekrümmt ausgebildet. Diese sphärisch geformte Oberfäche 50 liegt direkt gegen eine Rückwand 52 des Hebels 28 an. Um hier eine zuverlässige Abdichtung zwischen der Rückwand 52 des Hebels 28 und der Dichtscheibe 46 sicher zu stellen, weist die Rückwand 52 ebenfalls eine Krümmung auf, jedoch eine negative sphärische Krümmung, was in dieser Anmeldung immer bedeutet, dass der Mittelpunkt des Radius der Sphäre an einer zum Hebel 28 entgegengesetzten Seite der gekrümmten Oberfläche angeordnet ist. Der Krümmungsradius dieses sphärisch ausgebildeten Bereiches der Rückwand 52 ist größer zu wählen als der Krümmungsradius der Dichtschieibe 46 im korrespondierenden Bereich. Dies hat zur Folge, dass zwischen der Rückwand 52 des Hebels 28 und der Dichtscheibe 46 immer eine ringförmige Linienberührung vorliegt.

Der Hebel 28 weist an seinem Außenumfang eine sich zum Strömungsgehäuse erstreckende Hülse 54 auf, die den Lagerbereich des Strömungsgehäuses 10 zumindest teilweise radial umgibt.

Des Weiteren ist in der Figur eine schematisch dargestellte Feder 56 zu erkennen, welche den Hebel 28 in Richtung zum Strömungskanal 12 mit einer Federkraft belastet. Die schematische Darstellung der Feder 56 erfolgt, da sowohl der Kraftangriffspunkt der Feder 56 als auch die Ausführung und Anordnung der Feder 56 in weitem Maße variabel ist. So ist es denkbar, diese Feder 56 entweder als Druck- oder als Zugfeder auszubilden. Auch kann sie gleichzeitig als Rückstellfeder dienen und beispielsweise über die Hülse 54 auf den Hebel 28 wirken.

Erfindungswesentlich ist, dass eine Kraft auf die Stellwelle 14 oder den damit fest verbundenen Hebel 28 in Richtung zur zweiten Lagerbuchse 22 beziehungsweise in Richtung des Strömungskanals 12 erzeugt wird. Durch diese Kraft, die in diesem Ausführungsbeispiel durch die Feder 56 aufgebracht wird, wird die Rückwand 52 des Hebels 28 mit seiner negativ sphärischen Fläche gegen die sphärische Oberfläche 50 der Dichtscheibe gedrückt. Gleichzeitig wird die Dichtscheibe 46 mit ihrem entgegengesetzten axialen Ende 48 gegen das erste axiale Ende der Lagerbuchse 38 gedrückt und diese wiederum gegen den feststehenden Anschlag 42. Da die Stellwelle 14 geringfügig in der Lagerbuchse 20 und damit auch der Hebel 28 geringfügig zur Achse gekippt werden kann und die Dichtscheibe 46 beweglich zur Stellwelle 14 und diese umgebend angeordnet ist, ist sichergestellt, dass die Dichtscheibe 46 immer mit ihrer Anlagefläche 48 plan gegen die Lagerbuchse 20 anliegt und eine linienförmige umlaufende Anlage gegen die Rückwand 52 des Hebels 28 aufweist, auch wenn geringe Fluchtungs- oder Parallelitätsfehler vorliegen. Hierdurch wird erreicht, dass kein Schmutzwasser, Salz oder sonstige Verunreinigungen von außen zur Lagerfläche der Lagerbuchse 20 vordringen können, da weder entlang der Stellwelle noch von radial außen Spalte vorhanden sind. Des Weiteren kann auch kein Abgas aus dem Strömungskanal 12 nach außen dringen, da entlang der Stellwelle 14 wiederum eine Abdichtung durch die umlaufende Schweißverbindung zum Hebel 28 hergestellt wird und ein radiales Austreten von Abgas durch die beiden Dichtflächen 48, 50 der Dichtscheibe vermieden wird. Wird die Stellwelle 14 mit dem Hebel 28 über den Aktor gedreht, entsteht eine Relativbewegung zwischen der Lagerbuchse 20 und der Dichtscheibe 46, welche jedoch auf diesem Gleitlager ohne großen Verschleiß und bei unveränderter Dichtwirkung aufgrund der großen planen Auflagefläche gleiten kann.

Treten im Betrieb nicht berücksichtigte Bauteil- und Montagetoleranzen auf oder entstehen beispielsweise durch sich ändernde thermische Belastungen Wärmedehnungen oder Verschleiß durch Nutzung bleibt eine somit immer ausreichende Abdichtung in beide Richtungen sichergestellt, da sich die Lage der Dichtscheibe und die Lage der Stellwelle entsprechend anpassen werden. Zusätzlich wird ein Schmutzeintrag von außen durch die Hülse erschwert, die einen direkten Kontakt durch Schmutzwasser verhindert. Die Klappenvorrichtung und deren Abdichtung weisen eine lange Lebensdauer durch geringen Verschleiß auf und sind aufgrund der geringen Anzahl an Bauteilen einfach zu montieren.

Es sollte deutlich sein, dass der Schutzbereich nicht auf die beschriebene Klappenvorrichtung beschränkt ist, sondern verschiedene Modifikationen und konstruktive Änderungen denkbar sind. Insbesondere kann die Anpresskraft in unterschiedlicher Weise aufgebracht werden. Auch kann die Verbindung zwischen Welle und Hebel unterschiedlich verwirklicht werden. Nichtzuletzt können die beiden sphärischen Oberflächen des Hebels und der Dichtscheibe auch jeweils in umgekehrter Richtung gekrümmt sein.

## Patentansprüche

1. Klappenvorrichtung für eine Verbrennungskraftmaschine mit
einem Strömungsgehäuse (10), in dem ein Strömungskanal (12) ausgebildet ist,
einer Stellwelle (14),
einem Klappenkörper (16), der auf der Stellwelle (14) im Strömungskanal (12) angeordnet ist,
einer Gehäusebohrung (24) im Strömungsgehäuse (10), durch welche die Stellwelle (14) nach außen ragt,
einem Hebel (28), der an der Stellwelle (14) befestigt ist,
einer Lagerbuchse (20), welche in der Gehäusebohrung (24) angeordnet ist, und in der die Stellwelle (14) gelagert ist und
einer Dichtscheibe (46) mit einer zumindest teilweise sphärisch geformten Oberfläche (50),
**dadurch gekennzeichnet, dass**
die zumindest teilweise sphärisch geformte Oberfläche (50) gespannt gegen eine Rückwand (52) des Hebels (28) anliegt.

2. Klappenvorrichtung für eine Verbrennungskraftmaschine nach Anspruch 1,
**dadurch gekennzeichnet, dass**
die Oberfläche (50) der Dichtscheibe (46) positiv sphärisch geformt ist und die Rückwand (52) des Hebels (28) zumindest teilweise negativ sphärisch oder kegelig geformt ist, wobei der Krümmungsradius der Oberfläche (50) der Dichtscheibe (46) kleiner ist als der Krümmungsradius der Rückwand (52) des Hebels (28).

3. Klappenvorrichtung für eine Verbrennungskraftmaschine nach Anspruch 1,
**dadurch gekennzeichnet, dass**
die Rückwand (52) des Hebels (28) zumindest teilweise positiv sphärisch geformt ist und die Oberfläche (50) der Dichtscheibe (46) negativ sphärisch geformt ist, wobei der Krümmungsradius der Oberfläche (50) der Dichtscheibe (46) größer ist als der Krümmungsradius der Rückwand (52) des Hebels (28).

4. Klappenvorrichtung für eine Verbrennungskraftmaschine nach einem der vorhergehenden Ansprüche,
**dadurch gekennzeichnet, dass**
die Dichtscheibe (46) beweglich zur Stellwelle (14) und diese radial umgebend angeordnet ist.

5. Klappenvorrichtung für eine Verbrennungskraftmaschine nach einem der vorhergehenden Ansprüche,
**dadurch gekennzeichnet, dass**
eine Feder (56) den Hebel (28) mit der Stellwelle (14) in Richtung des Strömungskanals (12) belastet.

6. Klappenvorrichtung für eine Verbrennungskraftmaschine nach einem der vorhergehenden Ansprüche,
**dadurch gekennzeichnet, dass**
die Dichtscheibe (46) mit ihrer zur sphärisch gekrümmten Oberfläche (50) axial entgegengesetzten flachen Fläche (48) gespannt und plan gegen die Lagerbuchse (20) anliegt.

7. Klappenvorrichtung für eine Verbrennungskraftmaschine nach einem der vorhergehenden Ansprüche,
**dadurch gekennzeichnet, dass**
die Lagerbuchse (20) eine Kohlelagerbuchse ist.

8. Klappenvorrichtung für eine Verbrennungskraftmaschine nach einem der vorhergehenden Ansprüche,
**dadurch gekennzeichnet, dass**
die Lagerbuchse (20) mit ihrem zur Dichtscheibe (46) entgegengesetzten axialen Ende gegen einen Anschlag (42) der Gehäusebohrung (24) anliegt.

9. Klappenvorrichtung für eine Verbrennungskraftmaschine nach einem der vorhergehenden Ansprüche,
**dadurch gekennzeichnet, dass**
die Stellwelle (14) im radial zur Lagerbuchse (20) innen liegenden Bereich (44) ballig geformt ist.

10. Klappenvorrichtung für eine Verbrennungskraftmaschine nach einem der vorhergehenden Ansprüche,
**dadurch gekennzeichnet, dass**
die Stellwelle (14) und die Gehäusebohrung (24) zwischen Strömungkanal (12) und Lagerbuchse (20) jeweils zumindest einen Absatz (35, 40) aufweisen.

11. Klappenvorrichtung für eine Verbrennungskraftmaschine nach einem der vorhergehenden Ansprüche,
**dadurch gekennzeichnet, dass**
der Hebel (28) mit der Stellwelle (14) stoffschlüssig umlaufend oder formschlüssig und dicht verbunden ist.

12. Klappenvorrichtung für eine Verbrennungskraftmaschine nach einem der vorhergehenden Ansprüche,
**dadurch gekennzeichnet, dass**
am Hebel (28) eine Hülse (54) angeordnet ist, die sich in Richtung des Strömungskanals (12) erstreckt.

## Claims

1. A flap device for an internal combustion engine, comprising:
a flow housing (10) in which a flow channel (12) is formed;
an actuating shaft (14);
a flap body (16) arranged on the actuating shaft (14) in the flow channel (12);
a housing bore (24) arranged in the flow housing (10), the actuating shaft (14) protruding outwards through said bore;
a lever (28) fixed on the actuating shaft (14);
a bearing bush (20) arranged in the housing bore (24), the actuating shaft (14) being mounted therein; and
a sealing disk (46) comprising a surface (50) which is configured to be at least partially spherically shaped,
**characterized in that** the at least partially spherically shaped surface (50) rests under tension against a rear wall (52) of the lever (28).

2. The flap device for an internal combustion engine as recited in claim 1, **characterized in that** the surface (50) of the sealing disk (46) is formed with a positive spherical shape, and the rear wall (52) of the lever (28) is formed at least partly with a negative spherical shape or a conical shape, wherein a radius of curvature of the surface (50) of the sealing disc (46) is smaller than a radius of curvature of the rear wall (52) of the lever (28).

3. The flap device for an internal combustion engine as recited in claim 1, **characterized in that** the rear wall (52) of the lever (28) is formed at least partly with a positive spherical shape, and the surface (50) of the sealing disc (46) is formed with a negative spherical shape, wherein a radius of curvature of the surface (50) of the sealing disc (46) is larger than a radius of curvature of the rear wall (52) of the lever (28).

4. The flap device for an internal combustion engine as recited in one of the preceding claims, **characterized in that** the sealing disc (46) is arranged to be movable with respect to the actuating shaft (14) and to radially surround the actuating shaft.

5. The flap device for an internal combustion engine as recited in one of the preceding claims, **characterized in that** a spring (56) tensions the lever (26) with the actuating shaft (14) in a direction of the flow channel (12).

6. The flap device for an internal combustion engine as recited in one of the preceding claims, **characterized in that** the sealing disc (46) with its plane surface (48) arranged axially opposite to the spherically shaped surface (50) rests on the bearing bush (20) in a tensioned manner and in a planar manner.

7. The flap device for an internal combustion engine as recited in one of the preceding claims, **characterized in that** the bearing bush (20) is a carbon bearing bush.

8. The flap device for an internal combustion engine as recited in one of the preceding claims, **characterized in that** the bearing bush (20) comprises an axial end arranged opposite of the sealing disc (46), by which the bush rests on a stop (42) of the housing bore (24).

9. The flap device as recited in for an internal combustion engine as recited in one of the preceding claims, **characterized in that** the actuating shaft (14) comprises a convex shape in a region (44) situated radially inward with respect to the bearing bush (20).

10. The flap device as recited in for an internal combustion engine as recited in one of the preceding claims, **characterized in that** the actuating shaft (14) and the housing bore (24) each comprise at least one shoulder (35, 40) arranged between the flow channel (12) and the bearing bush (20).

11. The flap device as recited in for an internal combustion engine as recited in one of the preceding claims, **characterized in that** the lever (28) is connected with the actuating shaft (14) in a materially bonded manner or in a form-fitting and tight manner.

12. The flap device as recited in for an internal combustion engine as recited in of one of the preceding claims, **characterized in that** the lever (28) further comprises a sleeve (34) arranged thereon which extends in a direction of the flow channel (12).

## Revendications

1. Dispositif à clapet pour moteur à combustion interne avec
un boitier d'écoulement (10) dans lequel est formé un conduit d'écoulement (12),
un arbre de réglage (14),
un corps de clapet (16) disposé sur l'arbre de réglage (14) dans le boitier d'écoulement (10),
un orifice de boitier (24) dans le boitier d'écoulement (10), à travers lequel l'arbre de réglage (14) s'étend vers l'extérieur,
un levier (28) monté sur l'arbre de réglage (14),
un coussinet (20) disposé dans l'orifice de boitier (24) et dans lequel est supporté l'arbre de réglage (14), et
une bague d'étanchéité (46) avec une surface (50) au moins partiellement de forme sphérique,
**caractérisé en ce que**
la surface (50) au moins partiellement de forme sphérique s'appuie, en état tendu, sur un paroi arrière (52) du levier (28).

2. Dispositif à clapet pour moteur à combustion interne selon la revendication 1, **caractérisé en ce que** la surface (50) du bague d'étanchéité (46) est de forme sphérique positive et le paroi arrière (52) du levier (28) est au moins partiellement de forme sphérique négative ou conique, le rayon de courbure de la surface (50) du bague d'étanchéité (46) étant inférieur au rayon de courbure du paroi arrière (52) du levier (28).

3. Dispositif à clapet pour moteur à combustion interne selon la revendication 1, **caractérisé en ce que** le paroi arrière (52) du levier (28) est au moins partiellement de forme sphérique positive et la surface (50) du bague d'étanchéité (46) est de forme sphérique négative, le rayon de courbure de la surface (50) du bague d'étanchéité (46) étant supérieur au rayon de courbure du paroi arrière (52) du levier (28).

4. Dispositif à clapet pour moteur à combustion interne selon l'une quelconque des revendications précédentes, **caractérisé en ce que** la bague d'étanchéité (46) est disposée de manière mobile par rapport à l'arbre de réglage (14) et entourant ledit arbre radialement.

5. Dispositif à clapet pour moteur à combustion interne selon l'une quelconque des revendications précédentes, **caractérisé en ce que** un ressort (36) charge le levier (28) avec l'arbre de réglage (14) vers le conduit d'écoulement (12).

6. Dispositif à clapet pour moteur à combustion interne selon l'une quelconque des revendications précédentes, **caractérisé en ce que** la face (48) plane de la bague d'étanchéité (46), axialement opposée à la surface (50) courbée sphériquement, reste sur le coussinet (20) d'une manière tendue et plane.

7. Dispositif à clapet pour moteur à combustion interne selon l'une quelconque des revendications précédentes, **caractérisé en ce que** le coussinet (20) est un coussinet en carbone.

8. Dispositif à clapet pour moteur à combustion interne selon l'une quelconque des revendications précédentes, **caractérisé en ce que** le coussinet (20) reste sur une butée (42) de l'orifice de boitier (24) par son extrémité axialement opposée à la bague d'étanchéité (46).

9. Dispositif à clapet pour moteur à combustion interne selon l'une quelconque des revendications précédentes, **caractérisé en ce que**, dans sa partie (44) radialement intérieure par rapport au coussinet (20), l'arbre de réglage (14) est de forme bombée.

10. Dispositif à clapet pour moteur à combustion interne selon l'une quelconque des revendications précédentes, **caractérisé en ce que** l'arbre de réglage (14) et l'orifice de boitier (24) chacun présente au moins un épaulement (35, 40) entre le conduit d'écoulement (12) et le coussinet (20).

11. Dispositif à clapet pour moteur à combustion interne selon l'une quelconque des revendications précédentes, **caractérisé en ce que** le levier (28) est lié à l'arbre de réglage (14) par liaison matérielle sur le pourtour de l'arbre ou par engagement positif et étanche.

12. Dispositif à clapet pour moteur à combustion interne selon l'une quelconque des revendications précédentes, **caractérisé en ce que** une douille (54) est disposée sur le levier (28), qui s'étend vers le conduit d'écoulement (12).
